# EUROPEAN PATENT SPECIFICATION

(11) **EP 0 273 067 B1**
(45) Date of publication and mention of the grant of the patent: **09.06.1993**
(21) Application number: 86118133.7
(22) Date of filing: 30.12.1986
(51) Int. Cl.: A01F 15/08

(54) **Baler load sensor**
Lastsensor für Ballenpressen
Capteur de charge pour presses à balles

(43) Date of publication of application: 06.07.1988
(73) Proprietor: HESSTON BRAUD (Société Anonyme), F-85220 Coex (FR)
(72) Inventor: Goeckner, Victor D., Virden Illinois 62690 (US); Schrag, Thomas G., Newton Kansas 67114 (US)
(74) Representative: Saconney, Piero

(56) References cited:
- FR-A- 2 360 413
- US-A- 2 763 201
- US-A- 4 624 180
- US-A- 4 627 341
- A.E. FRIBANCE: "INDUSTRIAL INSTRUMENTATION FUNDAMENTALS", 1st Ed., 1962, McGraw Hill, New York, US; pages 273-276

## Description

The present invention is directed to a baler of the kind defined in the preamble of claim 1 and more particularly to an improvement in a sensor used in measuring load forces applied to a structural member of such baler.

In the balers of the kind considered, it is generally desirable to achieve relatively uniform density in the bales of forage material or hay produced. The bale density is in turn controlled by the amount of axial force applied to the bale by an axial compression member or plunger driven by one or more elongate tubular "plunger arms". The compression on this plunger arm depends on the position of movable side wall members of the baling apparatus. These side wall members, together with fixed top and bottom walls, define what is generally referred to in the art as the baling chamber.

In accordance with prior art practice, various means were utilized to measure the compressive force applied in the axial direction by the plunger arm and to control the positions of the movable sidewalls accordingly so as to achieve relatively uniform bale density. Also, monitoring of the compression of the plunger arm allows the controller to "open up" the sidewalls, if necessary to prevent excessive load on the apparatus and consequent damage thereto. However, as previously noted, solutions heretofore proposed for the problem of measuring the axial compressive force or load have been relatively difficult and expensive to implement. One example of such known solutions is given by document US-A-4 627 341, which makes use of strain gauges and related circuitry for obtaining accurate measurements of this compressive force or load. This solution is relatively unreliable, complex and expensive. This is due in large part to the non-linear characteristics of the stresses or compressive forces experienced in the plunger arm member in response to various compressive forces applied thereto.

The object of the invention is to provide a baler having a sensor of rugged and reliable construction associated to at least one of its plunger arms and which is adapted to furnish more accurate measurements of the above-said compressive force or load.

According to the invention this object is attained by a baler as claimed in claim 1.

In a baler according to the invention the sensor constituted by a coil and a ferromagnetic core is enclosed within the elongate tubular plunger arm and is mounted to opposite end surfaces of the arm.

It is known (for example from the book by Austin E. Fribance "Industrial Instrumentation Fundamentals", McGraw Hill Book Company Inc., pages 273-276) to measure relative positions or movements of two members by the use of a coil of wire into which a ferromagnetic core extends. Such an arrangement has, however, never been used in connection with an elongate tubular member to obtain an electric signal corresponding to the compressive loading of such tubular member.

In a baler of the type considered, the plunger arm may apply a compressive force of up to 45,000 kg to the forage material. During this compression the plunger arm itself is compressed. Accordingly, a change in flux density of the coil will take place as the ferromagnetic core is moved relative thereto in response to the compression of the plunger arm.

In the claimed arrangement the coil of wire is coupled with an oscillator for generating an alternating signal so as to obtain a frequency-variable signal the frequency of which varies with the movement of the core inside of the coil of wire.

In practice, a plunger arm undergoing a compressive force of the order of 45,000 Kg is in fact compressed only of a very small amount, for example on the order of 0.25 mm. It will be appreciated that with a compression of the latter order only relatively small changes in the flux density occur. Hence, a high degree of resolution in reading the corresponding changes in the electrical signals developed across the coil is required.

Additionally, due in part to the rectilinear structure of the tubular plunger arm, the relationship between the force applied thereto and the amount of axial compresssion is a non-linear one. Moreover, the relationship between movement of the core piece inside the coil of wire and frequency developed by the oscillator is also non-linear. Accordingly, each such sensor should be carefully calibrated with the particular plunger arm on which it is to be used. It will be appreciated that such individual calibration can become relatively cumbersome and expensive.

To avoid the need of such individual calibration, the claimed arrangement includes a linearizing circuit as described.

The foregoing as well as other objects, features and advantages of the invention will become more readily apparent upon consideration of the following detailed description of the illustrated embodiment, together with reference to the drawings, wherein:
Fig. 1 is a rear perspective view of a baling machine or baler in conjunction with which the invention may advantageously be utilized;
Fig. 2 is an enlarged front perspective view of the baler of Fig. 1 partially broken away and illustrating further details thereof;
Fig. 3 is a side elevation, partially broken away illustrating a structural member or plunger arm of the baler of Figs. 1 and 2 in conjunction with which the invention is utilized;
Fig. 4 is a diagrammatic view illustrating operation of the baling machine or baler in accordance with the invention; and
Fig. 5 is a schematic diagram illustrating a circuit in accordance with a preferred form of the invention.

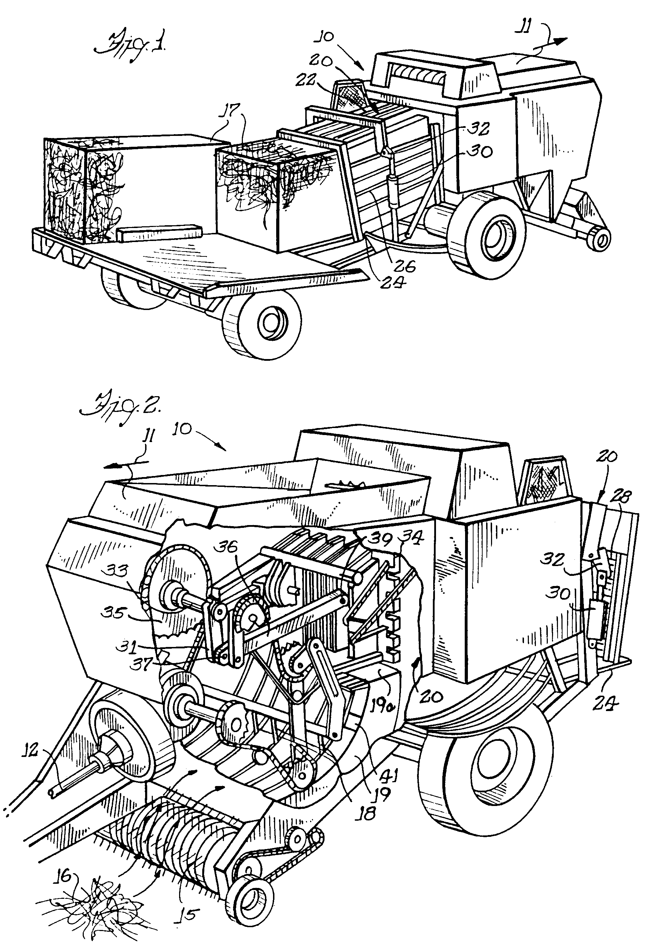

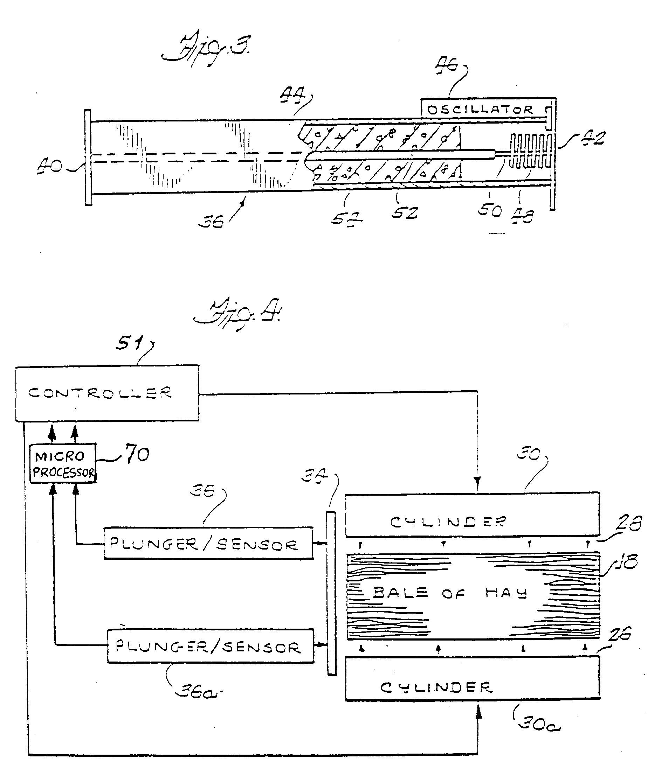

Referring now to the drawings and initially to Figs. 1 and 2 a baling machine or baler is designated generally by the reference numeral 10. Generally speaking, this baler 10 is pulled in a direction 11 by suitable means such as a tractor (not shown). A main drive shaft 12 is utilized to operate the baler 10 with power from the tractor power take-off (PTO).

In operation, the baler 10 includes a front or intake end or reel 15 which delivers forage material or hay 16 from the field to be further processed into bales 17 here shown exiting the rear of the baler 10. In this regard, the collected crop material is preferably broken up by movable fingers 18, which extend into an intake chute 19, into generally uniform "charges" or "flakes" and delivers it to a bale chamber 20.

The bale chamber 20 comprises fixed top and bottom wall members 22, 24 and a pair of inwardly compressible opposed side wall members 26 and 28. Suitable power means such as one or more hydraulic cylinders 30, 30a are coupled with suitable linkages 32 to effect relatively inward and outerward movement of the side walls 26, 28 to control the width of the bale of hay 17. At the same time, generally axial or longitudinal compression of the hay in the chamber 20 is effected by an axial or longitudinally slidable compression wall or plunger 34 which is axially or longitudinally driven by a pair of suitable plunger arms 36. Only one such plunger arm 36 is illustrated in Fig. 2 it being understood that both plunger arms are substantially identical.

In operation, the foregoing moving components of the baler 10 are linked by suitable chain drives or the like to be driven from the main power shaft 12. Accordingly, as the reel 15 rotates to take up the previously cut hay 16, and delivers it to the chute 19, the fingers 18 are arranged to periodically traverse the chute 19, to cut and deliver predetermined lengths of the crop material as a "flake" or "charge" to the baling chamber 20. In this regard, Fig. 2 illustrates the plunger arm and axially movable plunger 34 in a partially advanced position extending over the open end 19a of the chute 19. Accordingly, the fingers 18 are positioned toward the lower end of the chute 19 so as to be ready to deliver a succeeding charge to the bale chamber 20.

It will be noted that the plunger arm 36 is driven by a crank 31 which is in turn rotated by a shaft 33 affixed to a sprocket wheel 35. The plunger arm 36 is provided with bearings 37 and 39 at respective ends thereof to translate this rotary motion to axial motion of the compression wall or plunger 34. Accordingly, a suitable sensor diagrammatically illustrated at 41 may be utilized to detect the advanced position of fingers 18 for delivering a charge of material to bale chamber 20. It will be understood that when the fingers 18 are advanced in this fashion, the plunger 34 and the plunger arm 36 will be fully withdrawn and hence in a non-compressed condition to allow ingress of the flake to the bale chamber 20. As will be seen later, the signal from this sensor 41 may be utilized as a suitable indication of the uncompressed condition of plunger arm 36 for zeroing the apparatus of the invention after each compression or load measurement.

In operation it is generally desirable to obtain a relatively uniform density in the bales 18 produced by the baling chamber 20. Accordingly, the prior art (See e.g. US-A-4 627 341) has heretofore utilized a suitable sensor arrangement to monitor or sense the amount of compressive force applied by the axial or longitudinal compression member or plunger 34. A suitable controller then controls the position of the aside walls 26 and 28 by operating the cylinders 30, 30a so as to achieve substantially uniform density from one bale 18 to the next.

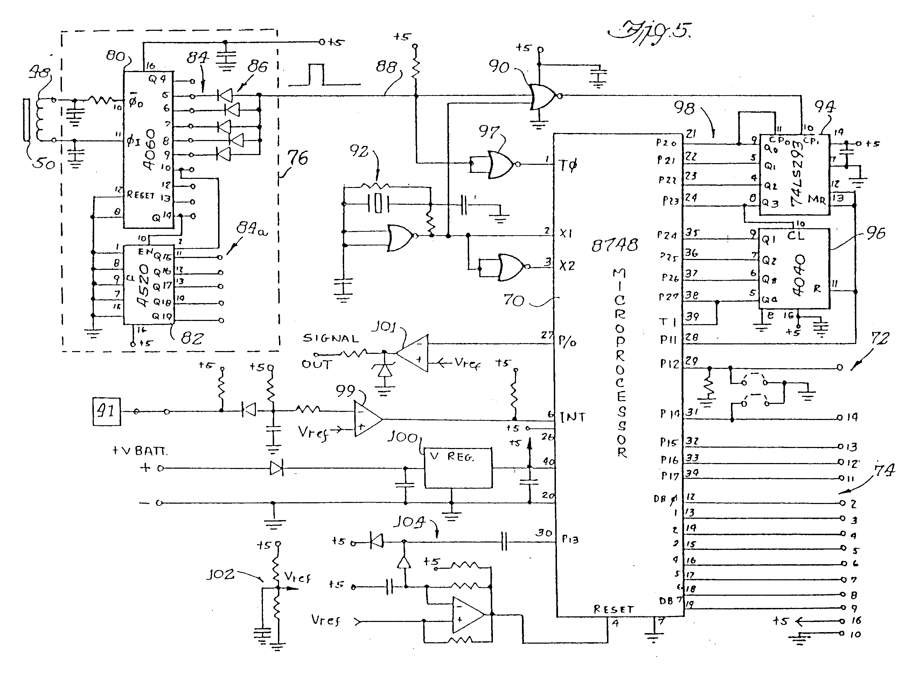

Referring now to Fig. 3 and in accordance with the present invention, a novel and surprisingly simple and inexpensive sensor is provided for monitoring the compressive force or load on the plunger arms 36 and hence the compressive load in the longitudinal or axial direction upon the hay in the bale chamber 20. As illustrated in Fig. 3, the plunger arm 36 comprises an elongate generally rectilinear tubular member. This tube or tubular member 36 includes a pair of similar end walls 40 and 42 and four elongate and similar rectangular side walls such as side wall 44 which define a generally rectangular cross-section of the tube or plunger arm 36. In accordance with the invention a suitable variable-frequency signal generator or oscillator 46 is provided for producing a signal which varies in frequency in accordance with the compressive force applied to the plunger arm 36 in the axial direction. The axial direction of the member 36 is defined between end walls 40 and 42.

In this regard, the signal generating means or oscillator circuit 46 may be mounted to the plunger arm itself or in any other suitable location. This oscillator circuit 46 is coupled to a variable element in the form of a coil of wire 48 which is provided with a relatively movable ferromagnetic core piece 50. In accordance with the illustrated embodiment, the coil of wire is substantially coaxially mounted within the tubular plunger arm 36 and preferably coupled to an inner surface of the end wall 42. The ferromagnetic core member 50 is coaxially mounted to extend at least partway into the coil 48 by an elongate support rod member 52, preferably of steel. This elongate rod 52 is preferably securely mounted to the opposite end wall surface 40, also coaxially with the tubular plunger arm 36. Hence, the rod member 52 defines means for mounting the ferromagnetic core coaxially within the tubular plunger arm for coaxial movement within the coil 48.

In accordance with a preferred form of the invention, a quantity of resilient material such as a foam rubber-like material 54 is provided to fill the interior volume of the plunger arm 36 intermediate the steel rod 52 and side walls 44 thereof to hold the rod in the substantially coaxial alignment just described.

From the foregoing it will be appreciated that the amount of compressive force applied to the plunger arm during compression of the charge in the baling chamber 20 will bear a given, though not necessarily linear, relationship with the amount of axial compression, that is, a reduction in axial length, of the rectangular tubular plunger arm 36. Stated alternatively, the plunger arm 36 may be generally viewed as a structural member to which a load force is applied. Hence, the reduction in length of a given dimension of the structural member in response to this load or force is measured by the apparatus of the invention. Still more generally, the invention provides means for measuring a change in the relative displacement or position between any two relatively movable points, for example coaxially aligned points in the end walls 40 and 42 of the tubular plunger arm 36. Hence, the relative position of the ferromagnetic core 50 with respect to the coil 48 will also vary or change by a corresponding, but again not necessarily linearly, related amount. Correspondingly, the frequency of the oscillatory or frequency-variable signal produced by the oscillator 46 of which the coil 48 is a part, will also vary by a corresponding, but again not necessarily linearly, related amount.

Referring briefly to Fig. 4, as previously mentioned, the sensor arrangement in accordance with the invention may advantageously be used with both of a pair of plunger arms 36, 36a, commonly employed in a baling machine such as the machine 10 of Figs. 1 and 2. Advantageously, a suitable controller, here designated generally by reference numerals 51, may be utilized to control the flow of hydraulic fluid to the cylinders 30, 30a which control the positioning of the sides 24, 26 of the baling chamber as previously described.

As just described, a number of non-linear relationships exist between the load or force applied to the plunger arm 36 and the frequency of the signal produced by the oscillator circuit 46. Advantageously, the present invention includes an output generating structure, illustrated in Fig. 5, responsive to the frequency-variable signal produced by the sensor arrangement of Fig. 3 for producing a load signal which corresponds to the compressive load on the plunger arm 36. Moreover, in accordance with the invention, this structure includes novel linearizing means responsive to a plurality of the frequency-variable signals developed in response to a corresponding plurality of known compressive forces applied to the plunger arm member 36 for producing a suitable linearizing control signal or signals to effectively linearize the response of the foregoing components for the particular plunger arm 36 with which they are associated. Hence, accurate and repeatable load calculations may then be made by calculating means of the output generating structure of the invention based upon the frequency-variable signal developed in response to loads applied in operation and the linearizing control signals previously developed and stored.

Advantageously and referring now more particularly to Fig. 5, the foregoing operations may be simply and economically carried out by a suitable microprocessor or microcomputer circuit component designated generally by the reference numeral 70. In the illustrated embodiment a microcomputer of the type generally designated 8748 is utilized. This microprocessor or microcomputer includes one or more suitable programmable register means, in the form of programmable read only memory, for receiving and storing linearizing data or information developed in response to the frequency-variable signals produced in response to known compressive forces applied to the structural member or plunger arm 36. This linearizing data may then be utilized together with the oscillatory or frequency-variable signals developed in operation for producing accurate and repeatable calculations of the axial loads being applied to the plunger arm 36 during operation.

In operation, the linearizing operation may be simply and rapidly carried out with respect to each plunger arm by the simple expedient of applying a plurality of known loads to effect different relative displacements or movements, and recording the resulting data. Hence, the recorded data may thereafter be utilized to accurately measure loads applied to displacements experienced during operation. In this regard, the microprocessor 70 may be suitably programmed to carry out the linearizing operation, or alternatively, another processor or computer may be utilized in conjunction with the microprocessor 70 to effect the linearizing operation.

To this end, the processor 70 is provided with a plurality of input/output (I/O) ports 72 and an 8-bit data bus 74 to communicate with a suitable computer (not shown) to effect the linearizing operation. In this regard, the use of a second computer permits the usage of a simpler and relatively cheaper microprocessor component 70, such as the microcomputer of the type 8748 previously described.

Referring more particularly to Fig. 5, suitable frequency-to-digital converting circuitry is coupled intermediate the coil 48 and the microcomputer or microprocessor 70 to convert the frequency or oscillatory signals developed into digital forms suitable for further processing by the microprocessor 70.

The frequency-to-digital converting circuitry 76 includes a first pair of counters 80, 82, the coil 48 being coupled across suitable terminals of the first counter 80. Selected count outputs 84 of the counter 80 are then coupled by a plurality of diodes 86 to an input line or conductor 88. This conductor 88 feeds one input of a two-input NOR-gate 90 which receives its second input from a high frequency crystal oscillator circuit 92. The output of this NOR-gate 90 is fed to the count input of a second counter circuit which in the illustrated embodiment comprises a pair of sequentially or series-coupled integrated circuit counter components 94, and 96. The count outputs of these latter counters 94 and 96 feeds suitable I/O ports, designated generally 98, of the microprocessor 70.

In operation, the first counter component 80 comprises an integrated circuit component of the type generally designated CD 4060. In addition to a counter circuit, this component includes a buffer circuit coupled between terminals "10" and "11" thereof to form an oscillator circuit with the coil 48. These buffer components are then internally coupled with the counter circuit portion of integrated circuit 80 to provide a count output on terminals 84 thereof corresponding to the frequency of the oscillator thus formed. The additional counter component 82 is provided in sequence to form a "programmable" counter with the counter circuit of the integrated circuit component 80. This provides additional terminals 84a from which to select to "program" a suitable signal onto the line 88. In this regard, the duty cycle of the signal produced at line 88 may then be varied or scaled to bear a desired relationship to the frequency developed by the oscillator circuit portion 46.

This variable duty cycle signal in turn gates through a corresponding number of high frequency pulses from the high frequency oscillator circuit 92 at the gate 90. The succeeding counter circuit comprising counters 94 and 96 counts these gated through pulses to deliver a parallel format count to the microprocessor 70. Hence, the parallel count delivered on I/O ports 98 is scaled to bear a preselected relationship with the frequency developed at the oscillator 46, in accordance with the selection of outputs 84, 84a of the counters 80, 82. Accordingly, the programming of the microprocessor enables automatic determination of the frequency of oscillator 46 from the count received at ports 98.

In the illustrated embodiment the zero or low level of the variable duty cycle signal produced on line 88 is utilized to gate pulses through gate 90. The intervening logic high states of this signal are utilized to signal the microprocessor by way of a buffer 97 of the end of one cycle of gated high frequency pulses. Hence, the processor calculates the load based upon the number of counts received at ports 98 intermediate pulses delivered by the buffer 97.

The previously mentioned sensor 41 associated with the fingers 18 feeds a suitable interrupt (INT) port of the microprocessor 70 by way of an input circuit including an operation amplifier 99 which is provided with a reference level Vref to be described later. Similarly, the output control signal developed for the controller 51 is fed out to the terminal designated SIGNAL OUT by way of a similar operational amplifier 101 which is referenced against the same level Vref.

An additional conventional voltage supply including a suitable integrated circuit voltage regulator 100 provides a stable plus 5 volt DC supply for the microprocessor 70 and other circuit components thus far illustrated. This voltage supply is preferably coupled to a vehicle battery (TV BATT), for example that of the tractor pulling the baler 10. Additionally, a suitable reference DC voltage level Vref is also provided from the regulated plus 5 volts by a suitable resistive voltage divider designated generally by reference numeral 102. This reference voltage and the plus 5 regulated DC volts are fed through a suitable power-up circuit 104 to inputs of the microprocessor 70 to initiate the microprocessor 70 in accordance with conventional practice.

## Claims

1. A baler including:
- a pair of relatively spaced wall members (26, 28) defining a restricted discharge opening therebetween through which compacted crop bales (17) may be discharged from the baler, said wall members (26, 28) being mounted for relatively shifting movement toward and away from one another to adjust the cross-sectional dimensions of said discharge opening;
- power means (30, 30a) operably coupled with said wall members (26, 28) for effecting said adjusting movement thereof;
- a plunger (34) reciprocable toward and away from said discharge opening by at least one tubular plunger arm (36, 36a) for compacting and incrementally advancing successive charges of crop materials toward said opening during each compaction stroke of the plunger (34), whereby to form a bale (17) whose density is determined at least in part by the resistance to advancement of the bale (17) caused by the restricted discharge opening, said or each said plunger arm (36, 36a) being subjected to compressive loading during a bale-forming compact ion stroke of the plunger (34),
- an electrical circuit including at least one sensor (48, 50) responsive to the compressive loading of said or each said plunger arm (36, 36a) to produce an output control signal which depends on the extent of said loading, and
- a controller (51) operably coupled with said power means (30, 30a) and responsive to said output control signal for causing adjustment of said wall members (26, 28),
characterised in that said or each said sensor has a pair of relatively shiftable electrical components in the form of an electromagnetic coil (48) and a ferromagnetic core (50) disposed within said tubular plunger arm (36, 36a) and secured to respective opposed ends (40, 42) of the plunger arm (36, 36a), said electrical components (48, 50) being operable, upon relative movement therebetween, for changing the frequency of an alternating signal generated by an oscillator (46) also included in said electrical circuit, thus generating a frequency variable signal, and said electrical circuit further including an output generating structure (70) which is adapted to receive said frequency variable signal and to generate said output control signal which is a linear function of said compressive loading in said plunger arm (36, 36a), the latter control signal being fed to said controller (51) for causing said adjustment of said wall members (26, 28).

2. A baler according to claim 1, characterised in that said ferromagnetic core (50) is supported, within said tubular plunger arm (36, 36a), by an elongate support rod member (52) which extends within the tubular plunger arm (36), and in that a quantity of resilient material (54) is provided to fill the interior volume of the plunger arm (36) intermediate the support rod member (52) and said end walls (44) of the arm (36) to hold the core (50) in substantially coaxial alignment with the coil (48).

3. A baler according to claim 1, characterised in that said output generating structure (70) includes linearizing means responsive to the frequency-variable signals produced in response to known compressive forces applied to the plunger arm (36, 36a) for producing linearizing data and programmable register means adapted to receive and store said linearizing data and is adapted to utilise said linearizing data together with said frequency-variable signals developed during operation of the baler for producing calculations of the axial loads being applied to the plunger arm (36, 36a) during operation and generating said output control signal to be fed to said controller (51).

4. A baler according to claim 3, characterised in that said output generating circuit comprises a digital microprocessor (70) and said electrical circuit further includes frequency-to-digital converting circuitry (76) coupled intermediate the electromagnetic coil (48) and the microprocessor (70).

5. A baler according to claim 4, characterised in that said converting circuitry (76) includes a buffer circuit which forms said oscillator circuit (46) with the coil (48), and a counter (80) fed by the oscillator circuit to provide a variable duty cycle count output signal corresponding to the frequency of the oscillator circuit.

6. A baler according to claim 5, characterised in that the said converting circuitry (76) further includes an additional programmable counter (82) having terminals (84a) from which the duty cycle of the count output signal may be varied or scaled to bear a desired relationship to the frequency developed by the converting circuitry (76).

7. A baler according to any of claims 4 to 6, characterised in that said electrical circuit further includes:
- a high frequency oscillator circuit (92),
- a two-input NOR-gate (90) one input of which is fed by selected count outputs (84) of the converting circuitry (76) and the other input of which is fed by the high frequency oscillator circuit (92) to deliver gated through pulses at the output of the NOR-gate (90), and
- a further counter circuit (94, 96) fed by the output of the NOR-gate (90) to count the gated through pulses and deliver a parallel format count to the microprocessor (70), whereby the parallel count delivered to the microprocessor (70) is scaled to bear a preselected relationship with the frequency developed at the converting circuitry (46).

8. A baler according to claim 7, characterised in that the two-input NOR-gate (90) is so arranged as to gate through the zero or low level of the said variable duty cycle signal, and the said electrical circuit further includes a buffer (97) to signal the microprocessor (70) of the end of one cycle of gated high frequency pulses, the microprocessor (70) being adapted to calculate the load in said or each said plunger arm (36, 36a) based on the number of counts received by the microprocessor (70) between the pulses received by the said buffer (97).

## Patentansprüche

1. Ballenformmaschine mit:
- einem Paar von zueinander beabstandeten Wandelementen (26, 28), die eine begrenzte Ausstoßöffnung dazwischen bilden, durch die verdichtete Erntegutballen (17) aus der Ballenformmaschine ausgestoßen werden können, wobei die Wandelemente (26, 28) gegeneinander verschiebbar angebracht sind, um die Querschnittsabmessungen der Ausstoßöffnung zu verändern;
- Antriebsmitteln (30, 30a), die mit den Wandelementen (26, 28) funktionsmäßig gekoppelt sind, um die Einstellbewegung davon durchzuführen;
- einem Kolben (34), der auf die Ausstoßöffnung hin und von dieser weg hin- und herbewegbar ist, und zwar durch mindestens einen rohrförmigen Kolbenarm (36, 36a) zum Verdichten und schrittweisen Vorschieben aufeinanderfolgender Ladungen von Erntegutmaterial in Richtung auf die Öffnung während jedes Verdichtungshubs des Kolbens (34), wodurch ein Ballen (17) gebildet wird, dessen Dichte zumindest teilweise durch den Widerstand beim Vorschieben des Ballens (17) bestimmt wird, der durch die begrenzte Ausstoßöffnung ausgeübt wird, wobei der oder jeder Kolbenarm (36, 36a) einer Druckbelastung während des ballenbildenden Verdichtungshubs des Kolbens (34) ausgesetzt ist;
- einer elektrischen Schaltung mit mindestens einem Sensor (48, 50), der auf die Verdichtungslast auf den oder jeden Kolbenarm (36, 36a) anspricht, um ein Ausgangssteuersignal zu erzeugen, das von dem Ausmaß der Belastung abhängt; und
- einer Steuerung (51), die funktionsmäßig mit dem Antriebsmittel (30, 30a) gekoppelt ist und auf das Ausgangssteuersignal anspricht, um eine Verstellung der Wandelemente (26, 28) zu bewirken;
**dadurch gekennzeichnet**, daß der oder jeder Sensor ein Paar von relativ zueinander verschiebbaren elektrischen Komponenten in Form einer elektromagnetischen Spule (48) und einem ferromagnetischen Kern (50) aufweist, der in dem rohrförmigen Kolbenarm (36, 36a) angeordnet und an jeweils gegenüberliegenden Enden (40, 42) des Kolbenarms (36, 36a) befestigt ist, wobei die elektrischen Komponenten (48, 50) bei einer dazwischen erfolgenden Relativbewegung die Frequenz eines Wechselsignals verändern können, das von einem Oszillator (46) erzeugt wird, der ebenfalls in der elektrischen Schaltung enthalten ist, so daß ein mit der Frequenz veränderliches Signal erzeugt wird; und daß die elektrische Schaltung ferner eine Ausgabeerzeugungsstruktur (70) aufweist, die so angeordnet ist, daß sie das mit der Frequenz veränderliche Signal aufnehmen und das Ausgangssteuersignal erzeugen kann, das eine lineare Funktion der Druckbelastung in dem Kolbenarm (36, 36a) ist, wobei das letztere Steuersignal der Steuerung (51) eingegeben wird, um die Einstellung der Wandelemente (26, 28) zu bewirken.

2. Ballenformmaschine nach Anspruch 1, **dadurch gekennzeichnet**, daß der ferromagnetische Kern (50) in dem rohrförmigen Kolbenarm (36, 36a) durch eine längliche Haltestange (52) gehalten ist, die sich in dem rohrförmigen Kolbenarm (36) erstreckt, und daß eine Quantität von nachgiebigem Material (54) vorgesehen ist, um den Innenraum des Kolbenarms (36) zwischen der Haltestange (52) und den Endwänden (44) des Arms (36) auszufüllen und den Kern (50) in im wesentlichen koaxialer Ausrichtung zu der Spule (48) zu halten.

3. Ballenformmaschine nach Anspruch 1, **dadurch gekennzeichnet**, daß die Ausgabeerzeugungsstruktur (70) eine Linearisierungseinrichtung aufweist, die auf das frequenzveränderliche Signal anspricht, das in Abhängigkeit von den bekannten Zusammendrückkräften erzeugt wird, die auf die Kolbenarme (36, 36a) wirken, um Linearisierungsdaten zu erzeugen, und die ein programmierbares Register aufweist, das die Linearisierungsdaten aufnimmt und speichert; und daß die Linearisierungsdaten zusammen mit den frequenzvariablen Signalen, die während des Betriebs der Ballenformvorrichtung abgeleitet wurden, verwendet wurden, um die Axialbelastungen zu berechnen, die während des Betriebs auf den Kolbenarm (36, 36a) aufgewendet werden, und um das Ausgabesteuersignal zu erzeugen, das an die Steuerung (51) gelegt wird.

4. Ballenformvorrichtung nach Anspruch 3, **dadurch gekennzeichnet**, daß die Ausgabeerzeugungsschaltung einen digitalen Mikroprozessor (70) aufweist, und daß die elektrische Schaltung ferner eine Frequenz/Digitalwandlerschaltung (76) besitzt, die zwischen die elektromagnetische Spule (48) und den Mikroprozessor (70) geschaltet ist.

5. Ballenformvorrichtung nach Anspruch 4, **dadurch gekennzeichnet**, daß die Wandlerschaltung (76) eine Pufferschaltung aufweist, die die Oszillatorschaltung (46) mit der Spule (48) bildet, und daß ein Zähler (80) von der Oszillatorschaltung gespeist wird, um ein Ausgabesignal von veränderlicher Taktfrequenzzählung zu liefern, das der Frequenz der Oszillatorschaltung entspricht.

6. Ballenformvorrichtung nach Anspruch 5, **dadurch gekennzeichnet**, daß die Wandlerschaltung (76) ferner einen zusätzlichen programmierbaren Zähler (82) aufweist, der Anschlüsse (84a) besitzt, von denen der Arbeitszyklus des Zählungsausgabesignals verändert oder skaliert werden kann, um eine gewünschte Beziehung auf die von der Wandlerschaltung (76) abgeleiteten Frequenz zu bilden.

7. Ballenformvorrichtung nach einem der Ansprüche 4 bis 6, **dadurch gekennzeichnet**, daß die elektrische Schaltung ferner aufweist:
- eine Hochfrequenz-Oszillatorschaltung (92),
- ein NOR-Gatter (90) mit zwei Eingängen, von denen ein Eingang mit ausgewählten Zählerausgaben (84) von der Wandlerschaltung (76) und der andere Eingang von der HF-Oszillatorschaltung (92) gespeist wird, um gegatete Impulse am Ausgang des NOR-Gatters (90) zu liefern, und
- eine weitere Zählerschaltung (94, 96), die von dem Ausgang des NOR-Gatters (90) gespeist wird, um die hindurchgelassenen Impulse zu zählen und eine Zählung in Parallelform an den Mikroprozessor (70) zu legen, wodurch die an den Mikroprozessor (70) gelieferte parallele Zählung skaliert wird, um eine vorgewählte Beziehung zu der an der Wandlerschaltung (46) entwickelten Frequenz darzustellen.

8. Ballenformvorrichtung nach Anspruch 7, **dadurch gekennzeichnet**, daß das Zwei-Eingänge-NOR-Gatter (90) so angeordnet ist, daß das Null niveau oder das niedere Niveau des Signals mit veränderlicher Wiederholfrequenz hindurchgelassen wird und daß die elektrische Schaltung ferner einen Zwischenspeicher (97) aufweist, um dem Mikroprozessor (70) das Ende eines Zyklus von gegateten HF-Impulsen anzuzeigen, wobei der Mikroprozessor (70) so eingestellt ist, daß er die Last in dem oder jedem Kolbenarm (36, 36a) basierend auf einer Anzahl von Zählungen berechnet, die von dem Mikroprozessor (70) zwischen den vom Zwischenspeicher (97) aufgenommenen Impulsen aufgenommen werden.

## Revendications

1. Machine de mise en balles comprenant :
- une paire d'organes (26, 28) formant des parois relativement espacées, délimitant entre elles une ouverture limitée d'évacuation, pour l'évacuation de balles comprimées (17) de matière de récolte, en dehors de la machine de mise en balles, ces organes (26, 28) formant les parois étant montés afin qu'ils puissent être rapprochés et écartés mutuellement l'un de l'autre afin que les dimensions en coupe de l'ouverture d'évacuation soient ajustées,
- un dispositif moteur (30, 30a) couplé aux organes (26, 28) formant les parois de manière que leur déplacement d'ajustement soit assuré,
- un plongeur (34) qui peut se déplacer en translation en se rapprochant de l'ouverture d'évacuation et en s'en écartant sous la commande d'au moins un bras tubulaire (36, 36a) de plongeur afin que les charges successives de matière de récolte soient comprimées et avancent progressivement vers l'ouverture à chaque course de compression du plongeur (34), si bien qu'une balle (17) est formée avec une densité déterminée au moins en partie par la résistance à l'avance de la balle (17) due à l'ouverture limitée d'évacuation, le bras ou chaque bras de plongeur (36, 36a) étant soumis à une force de compression pendant la course de compression du plongeur (34) au cours de la formation de la balle,
- un circuit électrique comportant au moins un capteur (48, 50) sensible à la force de compression du bras ou de chaque bras de plongeur (36, 36a) et destiné à former un signal de commande de sortie qui dépend de l'amplitude de cette charge, et
- un organe (51) de commande couplé au dispositif moteur (30, 30a) et commandé par le signal de commande de sortie afin qu'il provoque l'ajustement des organes (26, 28) de parois,
caractérisée en ce que le capteur ou chaque capteur possède deux éléments électriques mobiles l'un par rapport à l'autre, sous forme d'un enroulement électromagnétique (48) et d'un noyau ferromagnétique (50) disposés à l'intérieur du bras tubulaire (36, 36a) de plongeur et fixés aux extrémités respectives opposées (40, 42) du bras (36, 36a) de plongeur, les éléments électriques (48, 50), lors d'un déplacement mutuel relatif, provoquant un changement de la fréquence d'un signal alternatif créé par un oscillateur (46) qui est aussi incorporé au circuit électrique, si bien qu'un signal à fréquence variable est formé, et le circuit électrique comporte en outre une structure (70) génératrice d'un signal de sortie, qui est destinée à recevoir le signal à fréquence variable et à créer le signal de commande de sortie qui est une fonction linéaire de la force de compression appliquée au bras (36, 36a) du plongeur, ce dernier signal de commande étant transmis à l'organe de commande (51) afin qu'il provoque l'ajustement des organes (26, 28) de parois.

2. Machine de mise en balles selon la revendication 1, caractérisée en ce que le noyau ferromagnétique (50) est supporté, à l'intérieur du bras tubulaire (36, 36a) de plongeur, par un organe (52) sous forme d'une tige allongée de support disposée dans le bras tubulaire (36) du plongeur, et en ce qu'une quantité d'une matière élastique (54) est disposée afin qu'elle remplisse le volume interne du bras (36) du plongeur entre l'organe (52) sous forme d'une tige de support et les parois d'extrémité (44) du bras (36), afin que le noyau (50) soit maintenu de façon pratiquement alignée coaxialement à l'enroulement (48).

3. Machine de mise en balles selon la revendication 1, caractérisée en ce que la structure (70) génératrice d'un signal de sortie comporte un dispositif de linéarisation commandé par les signaux à fréquence variable produits sous l'action de forces connues de compression appliquées au bras (36, 36a) de plongeur pour la formation de données de linéarisation, et des registres programmables destinés à recevoir et conserver les données de linéarisation et destinés à utiliser les données de linéarisation avec les signaux à fréquence variable formés pendant le fonctionnement de la machine de mise en balles pour l'exécution de calcul des forces axiales appliquées au bras (36, 36a) de plongeur pendant le fonctionnement et à créer le signal de commande de sortie destiné à l'organe de commande (51).

4. Machine de mise en balles selon la revendication 3, caractérisée en ce que le circuit générateur d'un signal de sortie comprend un microprocesseur numérique (70), et le circuit électrique comporte un circuit (76) de conversion de fréquence en un signal numérique, couplé entre l'enroulement électromagnétique (48) et le microprocesseur (70).

5. Machine de mise en balles selon la revendication 4, caractérisée en ce que le circuit de conversion (76) comporte un circuit tampon qui forme le circuit oscillateur (46) avec l'enroulement (48), et un compteur (80) alimenté par le circuit oscillateur et destiné à donner un signal de sortie de nombre à facteur cyclique variable, correspondant à la fréquence du circuit oscillateur.

6. Machine de mise en balles selon la revendication 5, caractérisée en ce que le circuit de conversion (76) comporte en outre un compteur programmable supplémentaire (82) ayant des bornes (84a) à partir desquelles le facteur cyclique du signal de sortie de nombre peut être modifié ou peut subir un décalage d'échelle afin qu'il présente une relation voulue avec la fréquence donnée par le circuit de conversion (76).

7. Machine de mise en balles selon l'une quelconque des revendications 4 à 6, caractérisée en ce que le circuit électrique comporte en outre :
- un circuit oscillateur (92) à haute fréquence,
- une porte NON-ET (90) à deux entrées dont une entrée reçoit les signaux choisis de sortie de nombre (84) du circuit de conversion (76) et dont l'autre entrée reçoit le signal du circuit oscillateur (92) à haute fréquence afin qu'il transmette des impulsions déclenchées à la sortie de la porte NON-ET (90), et
- un circuit compteur supplémentaire (94, 96) alimenté par le circuit de sortie de la porte NON-ET (90) et destiné à compter les impulsions déclenchées afin qu'il transmette un nombre en format parallèle au microprocesseur (70), si bien que le nombre parallèle transmis au microprocesseur (70) subit un changement d'échelle présentant une relation prédéterminée avec la fréquence créée dans le circuit de conversion (46).

8. Machine de mise en balles selon la revendication 7, caractérisée en ce que la porte NON-ET (90) à deux entrées est disposée afin qu'elle transmette le niveau bas ou zéro du signal à facteur cyclique variable, et le circuit électrique comporte en outre un circuit tampon (97) destiné à indiquer au microprocesseur (70) la fin d'un cycle des impulsions déclenchées à haute fréquence, le microprocesseur (70) étant destiné à calculer la force du bras ou de chaque bras (36, 36a) de plongeur d'après le nombre reçu par le microprocesseur (70) entre les impulsions reçues par le circuit tampon (97).
